# EUROPEAN PATENT APPLICATION

(11) **EP 2 942 087 A1**
(43) Date of publication of application: **11.11.2015**
(21) Application number: 15166844.9
(22) Date of filing: 07.05.2015
(51) Int. Cl.: A63B 69/40, A01K 15/02, A63B 71/06

(54) **AUTOMATED BALL-THROWING APPARATUS**

(30) Priority: 08.05.2014 US 201461990212 P
(71) Applicant: Lob-ster, Inc., North Hollywood, CA 91605 (US)
(72) Inventor: Hussey, Lance, Thousand Oaks, CA California 91361 (US); Wu, Shu Shuo, Thousand Oaks, CA California 91361 (US); Sawhney, Ravi, Thousand Oaks, CA California 91361 (US); Botsai, Kurt, Thousand Oaks, CA California 91361 (US); Firth, Richard, Thousand Oaks, CA California 91361 (US)
(74) Representative: Ahmad, Sheikh Shakeel

(57) **Abstract**

A ball-throwing apparatus (10) is disclosed. The apparatus includes a receptacle (32) for holding at least one ball-shaped projectile, the receptacle having an opening (34). A feeder is also included in the apparatus, the feeder having a track (62) associated with the opening in the receptacle. The track has a first section positioned adjacent the opening and a second section spaced apart from the first section. The apparatus also includes a holder for holding the at least one ball-shaped projectile in a stationary position, and a launching assembly for launching the at least one projectile in a direction extending away from the ball-throwing apparatus. The ball-throwing apparatus may be sized so that a variety of different pets are able to drop the at least one ball-shaped projectile into the receptacle. Methods of using the apparatus are also disclosed.

## Description

### CROSS-REFERENCE TO RELATED APPLICATIONS

This application claims the benefit of the filing date of U.S. Provisional Patent Application No. 61/990,212, filed May 8, 2014, the disclosure of which is incorporated by reference herein. This application is related to U.S. Design Patent Application No. 29/490,256, filed May 8, 2014, entitled "Automated Ball-Throwing Apparatus" and having an attorney docket reference LOBSTER 3.1F-006, the disclosure of which is also incorporated by reference herein.

### BACKGROUND OF THE INVENTION

The present invention relates, in general, to an apparatus for launching a projectile such as, for example, a tennis ball. The apparatus is usable by pets in order to gain exercise or training, or in other cases by humans for sports training.

Devices have been developed for automatically launching tennis balls or other projectiles to provide exercise for a variety of pets. These devices typically include a receptacle or hopper for receiving a plurality of balls, and a launching mechanism for launching the balls from the device. In some cases, the devices are suitable for use by a pet in a repeatable manner such as, for example, a dog playing fetch. The dog may be trained to drop a ball into the receptacle or hopper of the device, which will then launch the ball for the dog to retrieve and re-drop back in the receptacle or hopper over and over again, so that the device engages in a game of fetch with the dog.

Although some devices of this kind have been developed, they often suffer from non-intuitive designs or other issues making them difficult to use. Thus, there is a need for an improved device for launching a projectile that is usable by pets in order to gain exercise, or in other cases by humans for sports training.

### BRIEF SUMMARY OF THE INVENTION

A first aspect of the present invention includes a ball-throwing apparatus. The apparatus comprises a receptacle for holding at least one ball-shaped projectile, the receptacle having an opening. A feeder having a track is associated with the opening in the receptacle, the track having a first section positioned adjacent the opening and a second section spaced apart from the first section. The apparatus also includes a holder for holding the at least one ball-shaped projectile in a stationary position, and a launching assembly for launching the at least one projectile in a direction extending away from the ball-throwing apparatus. A handle is also attached to the receptacle for carrying the ball-throwing apparatus, the handle having a gripping section spaced apart and extending vertically upwards from the receptacle.

In an embodiment of this first aspect, the ball-throwing apparatus is sized so that a variety of different pets are able to drop the at least one ball-shaped projectile into the receptacle. Also, the gripping section of the handle may be spaced apart from the receptacle by a distance that is less that a diameter of the at least one ball-shaped projectile so that the handle forms a barrier for containing the at least one ball-shaped projectile in the receptacle.

A second aspect of the invention includes a ball-throwing apparatus. The apparatus comprises a receptacle for holding at least one ball-shaped projectile, the receptacle being funnel-shaped, wherein the funnel shape of the receptacle leads to an opening in the receptacle. A feeder having a track is associated with the opening in the receptacle, the track having a first section positioned adjacent the opening and a second section spaced apart from the first section. Also, the apparatus includes a holder for holding the at least one ball-shaped projectile in a stationary position, and a launching assembly for launching the at least one projectile in a direction extending away from the ball-throwing apparatus, wherein the ball-throwing apparatus is sized so that a variety of different pets are able to drop the at least one ball-shaped projectile into the receptacle.

In some embodiments of this second aspect, the holder is movable to change the angle at which the at least one ball-shaped projectile is launched from the ball-throwing apparatus.

A method of exercising or entertaining a pet is also contemplated herein. The method comprises: (1) providing the ball-throwing apparatus according to the first or second aspects of the invention described above; (2) training the pet to drop the at least one ball-shaped projectile into the receptacle of the ball-throwing apparatus so that the at least one ball-shaped projectile travels through the opening in the receptacle, along the track of the feeder, and to the second section of the feeder; (3) causing the launching assembly to launch the at least one ball-shaped projectile from the ball-throwing apparatus; and (4) training the pet to retrieve the at least one ball-shaped projectile and drop it back into the receptacle.

### BRIEF DESCRIPTION OF THE DRAWINGS

A more complete appreciation of the subject matter of the present invention and of the various advantages thereof can be realized by reference to the following detailed description in which reference is made to the accompanying drawings in which:
Fig. 1 is a perspective, exploded view of a ball-throwing apparatus according to an embodiment of the present invention.
Fig. 2 is an exploded view of an upper housing assembly of the ball-throwing apparatus of Fig. 1.
Fig. 3 is an exploded view of a lower housing assembly of the ball-throwing apparatus of Fig. 1.
Fig. 4 is a partial-exploded view of a striker assembly used in the apparatus of Fig. 1.
Fig. 5 is an exploded view of certain components of the striker assembly of Fig. 4.
Fig. 6 is an assembled view of the ball-throwing apparatus of Fig. 1, with a ball being launched from the apparatus at different angles.
Fig. 7 is a perspective view of an alternate embodiment of the lower housing assembly of Fig. 3.
Figs. 8A-B are close-up views of certain components of the alternate lower housing assembly of Fig. 7.

### DETAILED DESCRIPTION

In describing aspects of the present invention(s), specific terminology will be used for the sake of clarity. However, the invention (s) is not intended to be limited to any specific terms used herein, and it is to be understood that each specific term includes all technical equivalents, which operate in a similar manner to accomplish a similar purpose.

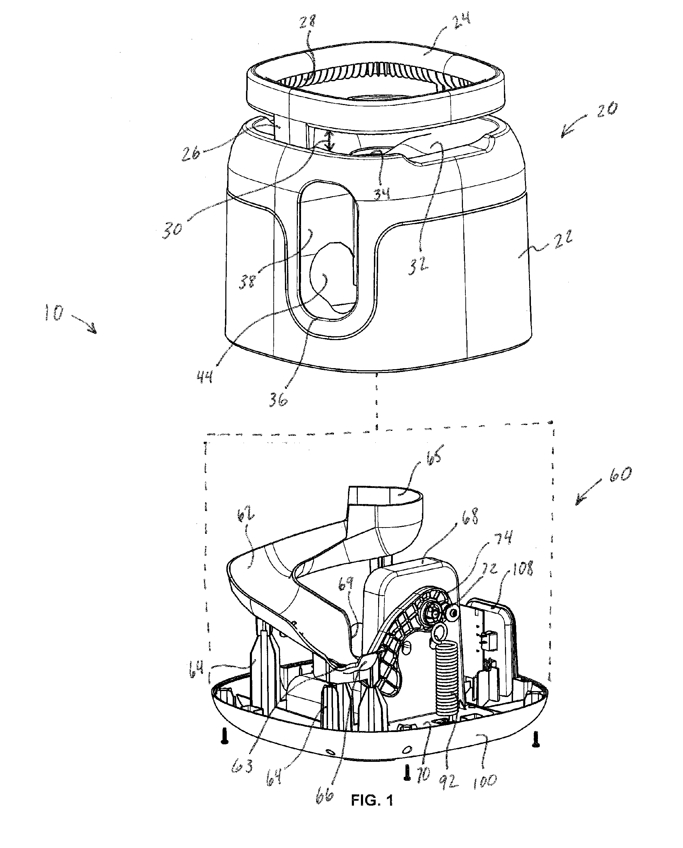

Fig. 1 depicts a ball-throwing apparatus 10 in a perspective view. Ball-throwing apparatus 10 is designed to launch a plurality of projectiles for a user (*e*.*g*., a variety of balls). The user may be, for instance, a pet such as a dog, or the user could be a human being interested in using apparatus 10 for sports training (*e*.*g*., practicing tennis, baseball, or another sport). Once a ball is placed into apparatus 10, it is automatically launched out of apparatus 10 for use by the user. A number of balls can be placed into apparatus 10 for continuous, sequential use (*e*.*g*., in the case of tennis practice), or a relatively lesser amount of balls may be continuously reused and launched over and over again (*e*.*g*., in the case of pet exercise and/or entertainment). Of course, any ball-shaped projectile may be used with apparatus 10, such as a tennis ball, racquet ball, or other ball.

Ball-throwing apparatus 10 includes an upper housing assembly 20 and a lower housing assembly 60. Upper housing assembly 20 can be integral with lower housing assembly 60, or it can attach to lower housing assembly 60 through a number of screws, snaps, interlocking edges, or other fixation devices or methods to form ball-throwing apparatus 10.

Upper housing assembly 20, as shown in Figs. 1-2, includes an upper base 22 that forms a receptacle or hopper 32 for holding balls 120. Hopper 32 may be a funnel-type structure, in one embodiment, that is curved or sloped towards an opening 34 sized to allow one or more balls 120 to travel through opening 34. Upper base 22 may also include a handle 24 attached to base 22, which extends around a perimeter of upper base 22 and is spaced apart from upper base 22 by an amount equal to spacing 30. Spacing 30 may be smaller than a diameter of each ball 120 situated within hopper 32 of upper base 22 so that balls 120 are prevented from accidentally falling out of hopper 22 through spacing 30. Thus, handle 24 acts as a barrier, in some instances, to help increase the number of balls that can be maintained in hopper 32. A larger number of balls 120 may therefore be placed within hopper 32 and retained in upper base 22 through the use of handle 22, which at the same time may be used to carry ball-throwing apparatus 10 from location to location.

In one embodiment, handle 22 is attached to upper base 22 through several sections 26, which may be integral with, snap-fit, screwed into, or otherwise attached to base 22. Handle 22 may also include a griping section, such as scalloped sections 28, for allowing easy or more secure gripping by the user.

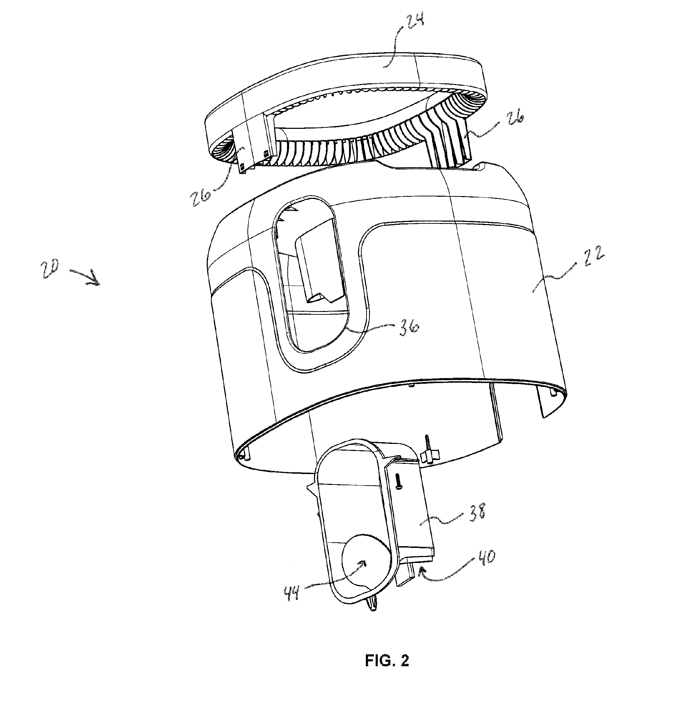

Upper base 22 also includes an opening 36 adapted to allow one or more balls 120 to be launched from apparatus 10. Opening 36 may be associated with a baffle 38 that is inserted into upper base 22 or integral therewith. In one embodiment, baffle 38 itself has an opening 44 sized to allow one or more balls 120 to travel through opening 44 and into a main portion of baffle 38. A slot 40, which is partially shown in Fig. 2, is also be formed in a back side of baffle 38 and extends upwards along the back side, in one embodiment, so that a hammer 74 utilized in apparatus 10 can strike a ball 120 positioned in baffle 38 without interfering with baffle 38.

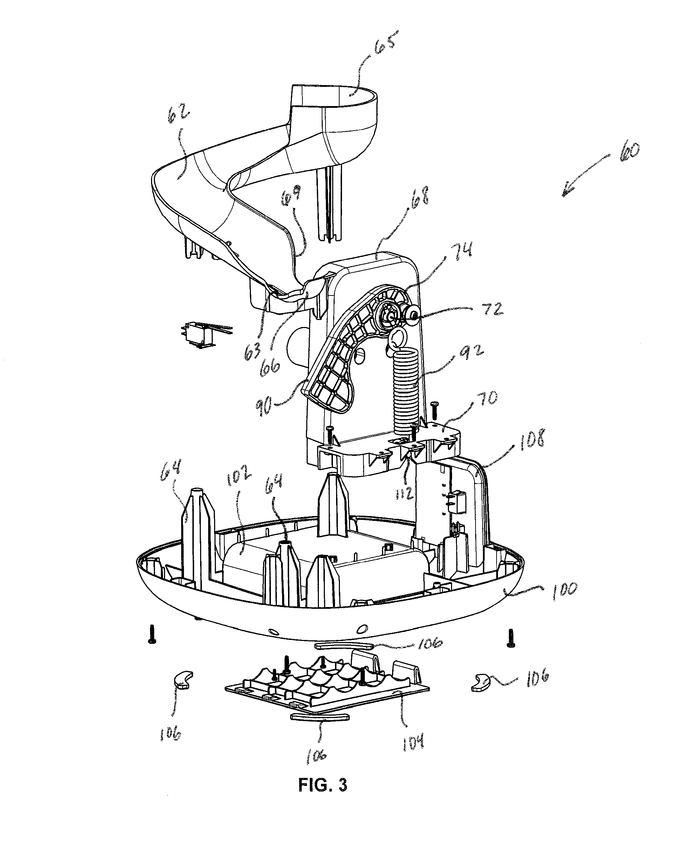

Fig. 3 shows an exploded view of lower housing assembly 60, which is comprised of a lower base 100 and a number of other components. Lower base 100 may include a series of stabilizing posts 64, which act to stabilize a chute or track 62. In one embodiment, chute 62 is a semi-cylindrical track that is shaped and sized to guide a ball 120 as it exits upper base 22 through opening 34 in hopper 32. Alternatively, chute 62 may be a completely or substantially completely enclosed cylinder so that a ball 120 cannot fall out of chute 62. Chute 62 includes a first, ball-receiving end 65 and a second end 66, which in some cases may comprise a cradle for holding a ball 120 prior to being launched from apparatus 10. Cradle 66 is semi-spherical, in one embodiment, so that it is designed to securely hold a ball 120 in a stationary position. Cradle 66 also includes a slot (not shown) adjacent a semi-circular cut out 69 formed in cradle.

A motor 68 attached to a motor support 70 is also provided within lower housing assembly 60. Motor 68 can be an electric motor powered by batteries or through other means (*e*.*g*., by plugging in apparatus 10 to AC power). Motor 68 has a post or shaft 72 extending from it, which is designed to rotate upon actuation of motor 68. Shaft 72 may include a section having a particular shape, for instance cylindrical, hexagonal, oblong, triangular, or rectangular. A control panel 108 may also be provided for interacting with and controlling motor 68.

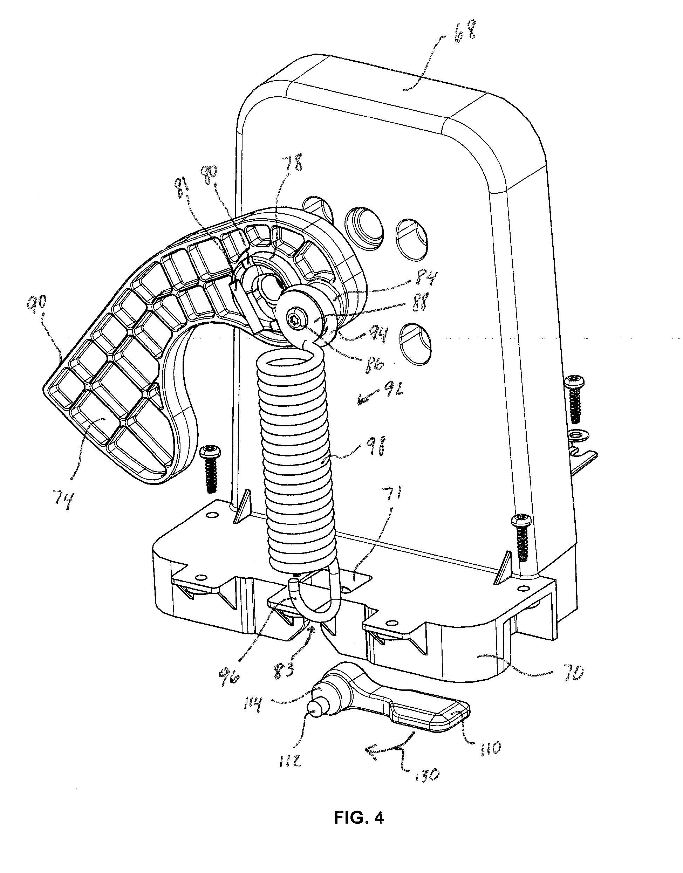

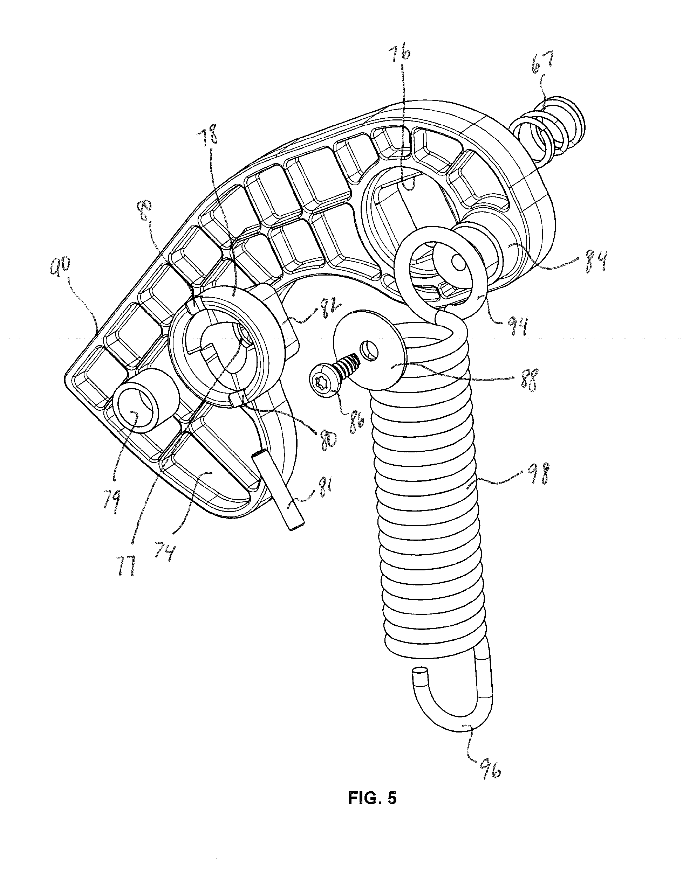

Lower housing assembly 60 also includes a hammer 74 (Figs. 4-5) for striking a ball 120 and launching it from apparatus 10. Hammer 74 includes a first end with a striking surface 90 and a second end with an opening 76. Opening 76 may be square or rectangular, in one embodiment, and sized to accept an insert 78, which itself has an opening 77 for receiving at least a section of shaft 72 of motor 68. Insert 78 has a projection 82 that is shaped to fit within opening 76 of hammer 74 so that insert 78 is movable in conjunction with hammer 74. That is, upon movement of hammer 74 insert 78 also moves due to the complementary shapes of projection 82 of insert 78 and opening 76 of hammer 74. Insert 78 also includes a set of recesses 80 adapted to receive a dowel 81.

In one embodiment, hammer 74 includes a post 84 for attaching to a spring 92. Post 84 has an internally-threaded bore adapted to receive a screw 86 and washer 88 combination for securing spring 92 to hammer 74. Hammer 74 is shaped so that a majority of its weight is disposed adjacent striking surface 90, in one embodiment, which allows for improved centrifugal force when actuating hammer 74 and launching a ball 120, as described in more detail below.

Spring 92, as shown in Fig. 4, includes a main body portion 98, a first end 94 for attaching to post 84 of hammer 74, and a second end 96 for attaching to a section of a lever 110 arranged within motor support 70. First and second ends 94, 96 of spring 92 are in the form of a ring or hook structure, in certain embodiments.

Lever 110 (Fig. 4) includes a first post 112 that extends outward from either or both sides of lever 110. In a preferred embodiment, post 112 extends from both sides of lever 110, although only one side of post 112 is shown in the figures. A second post 114 is also formed on lever 110. In one embodiment first post 112 extends from second post 114 and is formed off-center on post 114. In other words, first post 112 is at an eccentric position extending from second post 114. Lever 110 is fitted into an underside of motor support 70 so that first post 112 is situated in a set of recesses (a recess 83 is partially shown in Fig. 4), and lever 110 is able to rotate in, for example, a clockwise direction 130 as shown in Fig. 4. In particular, with first post 112 in the set of recesses 83 in the underside of motor support 70, an axle-type configuration is formed in which lever 110 is capable of rotation to a position clockwise from that shown in Fig. 4, as demonstrated by arrow 130, and also back to its initial position in a counterclockwise motion.

Referring still to Fig. 4, second end 96 of spring 92 extends through an opening 71 in motor support 70 and is fitted around a section of second post 114 of lever 110. And, with first end 94 of spring 92 attached to post 84 of hammer 74, spring 92 is flexed somewhat so that lever 110 is kept firmly in the underside of motor support 70. Stated differently, since spring 92 is flexed somewhat due to its connection with post 84 of hammer 74 and second post 114 of lever 110, first post 112 of lever 110 is kept firmly within the recesses 83 in the underside of motor support 70. Indeed, second post 114 of lever 110 is acted upon by second end 96 of spring 92, which assists in securing first post 112 of lever 110 within the recesses 83.

As shown in Fig. 3, lower base 100 also includes a battery housing 102 for receiving a number of batteries to power apparatus 10, and a batter cover or door 104 for keeping the batteries within battery housing 102. In some embodiments, a number of feet 106 are also attached to lower base 100 to provide support for apparatus 10 and prevent apparatus 10 from slipping on the ground. Feet 106 may be composed of, for example, a silicone, rubber, plastic, or metal material.

All of the components of upper and lower housing assemblies 20, 60 may be fitted together through the use of various screws or other fixation members, as shown in the figures, or alternatively through the use of press-fit structures (e.g., a snap-fit type mechanism), or a combination thereof.

In use, lower housing assembly 60, as shown in Fig. 3, is assembled by attaching chute 62 to stabilizing posts 64 so that a ball 120 can travel stably down chute 62. Motor support 70 with motor 68 attached is then connected with lower base 100 through the use of various fasteners, such as screws. Prior to attaching motor support 70 with lower base 100, lever 110 is also arranged in the underside of motor support 70 so that first post 112 is engaged with the recesses 83 in the underside of support 70. With motor support 70 and motor 68 engaged to lower base 100, lever 110 is securely retained within the recesses 83 in the underside of support 70 and is accessible through an opening (not shown) in a bottom surface of lower base 100. Thus, a user may actuate lever 110 by accessing lever 110 through the opening in the bottom surface of lower base 100.

As shown in Figs. 4-5, hammer 74 may then be inserted over shaft 72 extending from motor 68. In particular, hammer 74, with hammer insert 78 situated in opening 76, may be inserted over shaft 72 of motor 68. Shaft 72, in one embodiment, also includes a spring 67 around shaft 72. Hammer 74 and hammer insert 78 may be inserted over shaft 72 against the force of spring 67 so that shaft 72 is positioned in opening 77 of hammer insert 78. With shaft 72 in opening 77 of hammer insert 78, hammer 74 is configured to move in conjunction with the movement of shaft 72 of motor 68. That is, hammer 74 moves along with shaft 72 of motor 68. In some cases, this is because opening 77 in hammer insert 78 and shaft 72 of motor 68 are of complementary shapes (*e*.*g*., rectangular, hexagonal, triangular, etc.), such that rotation of shaft 72 causes rotation of hammer insert 78 and thus hammer 74. In one embodiment, a bushing 79 is also inserted over shaft 72 of motor 68, and dowel 81 is arranged through shaft 72 and bushing 79 and into recesses 80 in hammer insert 78 to prevent insert 78 from moving out of opening 76 in hammer 74. The placement of dowel 81 in recesses 80 is shown, for example, in Figs. 1 and 3. Dowel 81 may be press fit within recesses 80 so that it is securely retained therein.

Referring now to Fig. 4, first end 94 of spring 92 may be engaged with post 84 of hammer 74 by positioning first end 94 (which may be a ring or hook structure) over post 84. A screw 86 and washer 88 combination may then be used to secure first end 94 of spring 92 to post 84 of hammer 74.

Second end 96 of spring 92 is then secured to second post 114 of lever 110 through opening 71 in motor support 70. In particular, second end 96 of spring 92 (which may be a ring or hook structure) is positioned around second post 114 of lever 110 through opening 71 and, as a result, first post 112 of lever 110 is forced more firmly into the recesses 83 in the underside of motor support 70. In this position, spring 92 is slightly tensioned so that first and second ends 94, 96 of spring 92 remain secure on their respective attachment points (*i*.*e*., post 84 of hammer 74 and second post 114 of lever 110).

In the foregoing assembly of lower housing assembly 60, motor 68 is also associated with control panel 108 so that the user can control the operation of motor 68 through various buttons included on panel 108, or by using a remote device (either wireless or wired) that communicates with panel 108 and/or motor 68.

As shown in Fig. 2, upper housing assembly 20 is assembled by attaching handle 24 to upper base 22 at its respective sections 26 through the use of a snap-fit structure and/or screws or other fixation members (*e*.*g*., pins). Baffle 38 is then arranged in upper base 22 and secured to base 22 through the use of snap-fit structures and/or screws or other fixation members. Baffle 38 can also be movably secured within upper base 22.

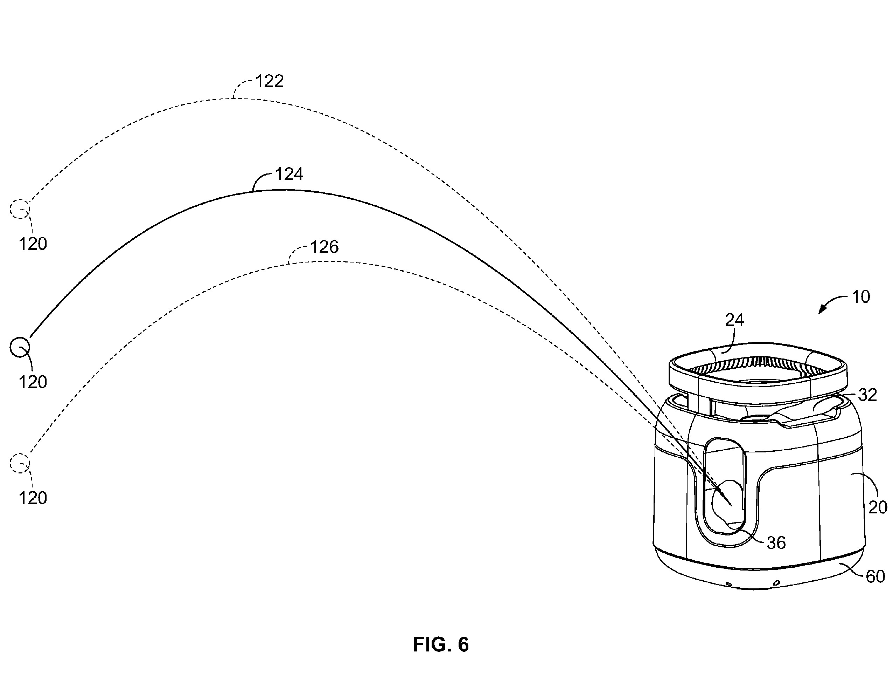

Referring to Fig. 1, upper housing assembly 20 is then attached to lower housing assembly 60 to complete the assembly of ball-throwing apparatus 10. An assembled version of apparatus 10 is shown in detail in Fig. 6.

As shown in Fig. 6, ball-throwing apparatus 10 is usable to launch ball-shaped projectiles 120 such as, for example, tennis balls or other sports balls. A particular application for apparatus 10 is for use with various different pets that can retrieve thrown objects, such as dogs. For instance, a user (which may be the pet owner) is able to train their pet to drop a ball 120 into hopper 32 of apparatus 10 so that ball 120 is funneled from hopper 32, through opening 34 in hopper 32, and into chute 62. As reflected in Fig. 1, first, ball-receiving end 65 of chute 62 may be arranged directly under opening 34 in hopper 32 so that ball 120 then falls in ball-receiving end 65 and travels down chute 62 towards second end 66 of chute 62. As ball 120 travels down chute 62 and towards second end 66, it passes through opening 44 in baffle 38 and into second end 66 of chute 62, which in some cases may form a cradle for holding ball 120 in a stationary position. In this position, ball 120 may trigger one or more sensors (*e*.*g*., it may roll onto a sensor positioned in second, cradle end 66 of chute 62), an electrical signal may be sent to motor 68 via the one or more sensors, and motor 68 may be actuated in response to the electrical signal. After receiving the electrical signal, motor 68 may then cause shaft 72 to rotate in a clockwise direction, which likewise causes movement of hammer 74 in the same direction.

As shaft 72 of motor 68 moves, hammer 74 moves clockwise towards a position in which it is vertical in relation to motor 68 (*e*.*g*., a top-dead-center position). During this motion, spring 92 is flexed due to its connection with post 84 of hammer 74. At a certain point after reaching the top-dead-center position through the action of shaft 72 of motor 68, hammer 74 (in particular its post 84) is then pulled by the action of the flexed spring 92 so that hammer 74 rotates swiftly in the clockwise direction. Since a majority of the weight of hammer 74 is, in one embodiment, situated towards striking surface 90 of hammer 74, striking surface 90 is rotated quickly through centrifugal force towards ball 120. Striking surface 90 of hammer 74 then strikes ball 120 to cause it to launch out of opening 36 in upper base 22 by some predetermined distance, as shown in Fig. 6. During this operation, striking surface 90 of hammer 74 moves through the slot (not shown) formed in a portion of second, cradle end 66 of chute 62, and into and through slot 40 in the backside of baffle 38 so that hammer 74 does not interfere with those structures. In other words, the aforementioned slots in second, cradle end 66 and baffle 38 allow striking surface 90 of hammer 74 to contact a bottom of ball 120 and then move through the slots as hammer 74 continues to rotate clockwise after the strike.

After ball 120 is launched, the user's pet can then retrieve ball 120 and drop it back into hopper 32 of apparatus 10 so that the foregoing operation is repeated over and over again. In this way, the user's pet can be trained to entertain and exercise itself by using ball-throwing apparatus 10. If desired, the user can also move apparatus 10 from location to location easily by grasping handle 24 and carrying apparatus 10 to a suitable location. Indeed, in one embodiment, apparatus 10 is battery powered through the use of batteries placed in battery housing 102 so that apparatus 10 is portable. Handle 24 also acts as a guard for holding multiple balls 120 if the user places multiple balls 120 in hopper 32 of apparatus 10.

Referring again to Fig. 6, in one embodiment apparatus 10 may also be configured to launch balls 120 or other projectiles at multiple different angles along trajectories 122, 124, 126. This simulates, for example, a standard hit, a pop fly, or a line drive (as in baseball), or a lob, standard return, or a drop shot (as in tennis).

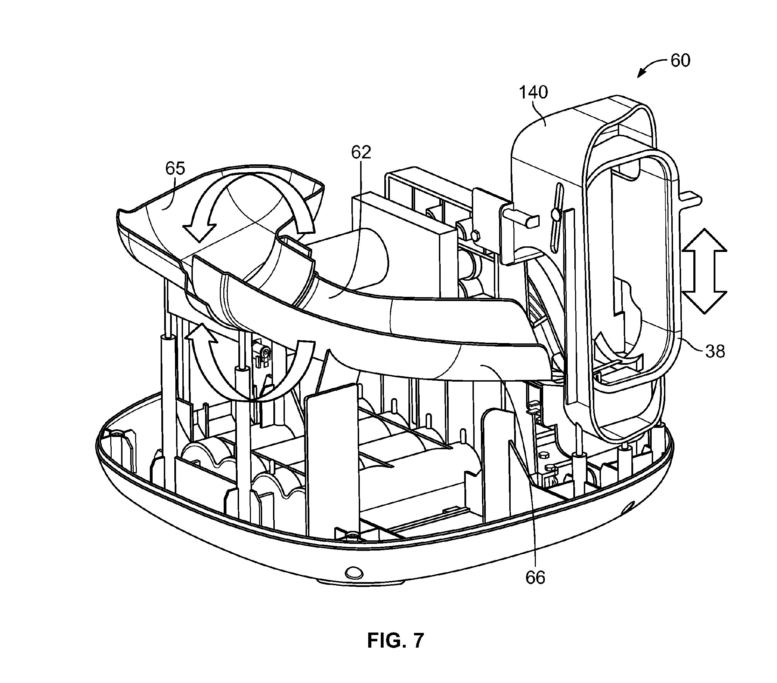

To achieve launching balls 120 at multiple different angles, a mechanism may be provided for vertically translating baffle 38 so that it is higher or lower than in a standard position. As baffle 38 is moved, chute 62 can also rotate or pivot along with the translation of baffle 38 so that second, cradle end 66 of chute 62 follows the vertical translation of baffle 38. As an example, to achieve a particular launch angle for a ball 120, striking surface 90 of hammer 74 strikes a bottom surface of ball 120 at a predetermined position along its arc of rotation, which causes ball 120 to be driven out of apparatus 10 and, in the process, ball 120 is launched at some predetermined angle according to the position of hammer 74 along its arc of rotation. By vertically translating baffle 38 (and pivoting or rotating chute 62 along with the movement of baffle 38), a user is able to modify the position that hammer 74 strikes the bottom surface of ball 120 along its arc of rotation so that the angle ball 120 is launched from apparatus 10 is either greater or less than a preset angle. Thus, the user can increase the angle at which ball 120 is launched out of apparatus 10 by translating baffle 38 in one direction (*e*.*g*., vertically upwards in Fig. 7), or the user can decrease the angle at which ball 120 is launched out of apparatus 10 by translating baffle 38 in a second, opposing direction (*e*.*g*., vertically downwards in Fig. 7). This produces different arcs or trajectories 122, 124, 126 for ball 120 at the user's discretion. Indeed, moving baffle 38 upwards from a preset position causes ball 120 to move vertically upwards, and thus, hammer 74 strikes ball 120 at a position that is more advanced along its arc of rotation, thereby causing ball 120 to fly higher than when baffle 38 is in the preset position. Ball 120 may move along with baffle 38 because, in this embodiment, baffle 38 may include its own cradle for holding a ball 120, such that as baffle 38 is move up or down, a ball 120 in the cradle is moved along with baffle 38.

In a particular embodiment, an electronic or manual movement mechanism may also be associated with baffle 38 to move baffle 38 by a desired amount, and control panel 108 may have one or more buttons or levers for changing the amount of movement for baffle 38 (and thus the launch angle of ball 120). In this way, the user may easily change the trajectory settings for apparatus 10.

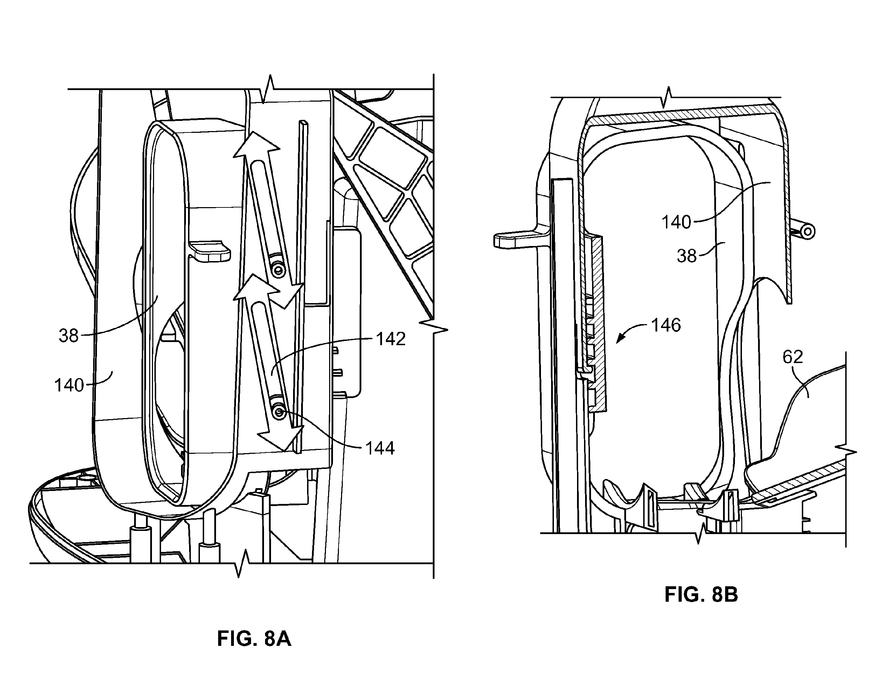

In another embodiment, as shown in Figs. 7 and 8A-B, apparatus 10 may utilize a ratchet mechanism to provide for secure movement of baffle 38 vertically upwards and downwards, as detailed above. In particular, baffle 38 may be situated in a baffle housing 140 that includes one or more slots 142 engageable with posts 144 extending from baffle 38 to guide baffle 38's movement upwards and downwards within baffle housing 140. And, baffle 38 and baffle housing 140 may include a ratchet mechanism 146 (Fig. 8B) configured to secure baffle 38 in position as it is moved upwards or downwards. Ratchet mechanism 146 can be bidirectional so that baffle 38 can move freely upwards or downwards to change the angle at which ball 120 is launched from apparatus 10. In addition, as shown in Fig. 7, second end 66 of chute 62 may be independently movable relative to first, ball-receiving end 65 so that second end 66 can pivot and/or otherwise move along with the movement of baffle 38. Thus, with the mechanism shown in Figs. 7 and 8A-B, a user can easily change the location of baffle 38 in a secure manner and alter the angle at which a ball 120 is launched from apparatus 10.

Referring to Fig. 4, the user may also change the force with which a ball 120 is launched from apparatus 10 through the use of lever 110 (or some other means). In one embodiment, first post 112 of lever 110 extends outwardly from second post 114 at an eccentric position such that, in a first orientation (*e*.*g*., the orientation shown in Fig. 4), a major portion of second post 114 faces upwards towards spring 92. In a second orientation (*e*.*g*., an orientation rotated one hundred and eighty degrees (180°) in a clockwise direction 130), the major portion of second post 114 faces downwards away from spring 92. This movement from the first orientation to the second orientation causes downward pressure to be borne on spring 92 since second post 114 of lever 110 can rotate freely within second end 96 of spring 92. In other words, as lever 110 is rotated from the first orientation to the second orientation, the major portion of second post 114 moves from an upwards position to a downwards position, which causes second end 96 of spring 92 to move downwards. This is because movement of lever 110 in a clockwise direction 130 causes the major portion of second post 114 to face downwards instead of upwards. In the second orientation for lever 110, therefore, spring 92 is pre-flexed to a greater extent than when lever 110 is in the first orientation. This additional pre-flexion of spring 92 results in more force acting on post 84 of hammer 74 during use, which causes hammer 74 to spin faster than when lever 110 is in the first orientation. A ball 120 situated in cradle 66 of chute 62 therefore flies farther when lever 110 is in the second orientation as compared to when lever 110 is in the first orientation. Thus, to change the distance that ball 120 flies, the user may simply rotate lever 110 through the opening (not shown) in the bottom surface of lower base 100 from the first orientation to the second orientation. This causes spring 92 to be pre-stressed to a greater extent and ball 120 to fly farther than when lever 110 is in the first orientation. It should be noted that the above-described trajectory settings 122, 124, 126 can also be utilized along with the movement of lever 110 to create at least six (6) different launch patterns for a ball 120.

In the devices depicted in the figures, particular structures are shown that are adapted for use in a ball-throwing apparatus. The use of alternative structures for such purposes, including structures having different lengths, shapes, and configurations is also contemplated. As an example, although ball-throwing apparatus 10 is described above for use with pets, it is equally useful in a sporting or other context for humans. For instance, a user may utilize apparatus 10 in a tennis training context and multiple tennis balls 120 may be situated within hopper 32 of apparatus 10. Tennis balls 120 can then be sequentially launched from apparatus 10 for use in tennis training. Baseballs could also be used for catching and batting practice.

In this and other embodiments, it may also be useful to provide a separate component or base for apparatus 10 that allows for rotation of apparatus 10 about its long axis from side to side. For instance, a base may be provided with a reciprocal and movable platform, which is rotatable within certain predefined angles from side to side. Apparatus 10 may therefore be situated on the platform of the base and allowed to rotate from side to side about its long axis to produce an effect similar to actually playing tennis against another human. This can also be useful for pets to launch a ball 120 in different directions to increase the exercise or engagement of the pet. Thus, with apparatus 10 situated on the platform of the aforementioned base, a first tennis ball 120 may be launched to the forehand side of the user, apparatus 10 may be rotated to launch a second tennis ball 120 down the center of the court, and apparatus 10 may be rotated again to launch a third tennis ball 120 to the backhand side of the user to simulate actually playing tennis. A random series of launches or shots (*e*.*g*., a forehand, backhand, and then center shot) may also be achieved by allowing the platform of the base to rotate from one position to the next in a random way.

In some embodiments, the platform of the base may be a circular disc that is rotatable through the use of a shaft or post mated with the disc, which is in turn connected to a reciprocal motor. Along with the other features of apparatus 10 described above (*e*.*g*., changing the force with which balls 120 are launched, or their launch angle), it is possible to provide an apparatus 10 and a base that is very useful for tennis training. This type of construction is also useful for exercising and/or entertaining a pet. Indeed, all different types of shots and play may be simulated to effectively provide good tennis training for the user, or better entertainment for the pet.

It is also contemplated that, if the aforementioned base is used for tennis training, control panel 108 may include a set of controls for use in exercising and/or entertaining a pet, and a set of controls for use in tennis training. This could include, for example, a first set trajectory settings for use in exercising and/or entertaining a pet, and a second, different set of trajectory settings for use in tennis training. The different trajectories may achieved by changing the arc that balls 120 fly in each context by moving baffle 38 to differing degrees. In particular, a lob in a tennis training context may be a tennis ball 120 that is launched at a lower angle than a pop fly in a pet context, or vice versa. Again, this change could result from pre-programming apparatus 10 to have multiple sets of controls on control panel 108, such that baffle 38 is moved to different degrees when the "lob" trajectory button is selected for tennis training, as compared to when the "pop fly" trajectory button is selected for use in exercising and/or entertaining a pet. In this way, apparatus 10 may allow for comprehensive tennis training by being both rotatable through the use of a base with a rotatable platform as discussed above, and by having customized settings that are most suited for tennis. Apparatus 10 also allows for use in exercising and/or entertaining a pet as apparatus 10 can have another set of settings that are best suited for exercising and/or entertaining a pet (*e*.*g*., a dog).

As another example, although only three (3) different launch angles, corresponding to trajectories 122, 124, 126 are described above, it is contemplated that many different launch angles and trajectories may be achieved through the use of apparatus 10. Indeed, baffle 38 may be moved through a continuum of positions to launch balls 120 at a continuum of different angles and trajectories.

In addition, control panel 108 may also provide a setting for launching balls 120 at different time intervals from apparatus 10. This may also include a pre-programmed fixed or random delay. For instance, apparatus may be configured to launch balls 120 at five (5) second, seven (7) second, or ten (10) second intervals, or any other interval of time, or at random times. In addition, once a ball 120 triggers a sensor positioned in second end 66 of chute 62 during use, a delay may be actuated so that ball 120 is not launched for some pre-programmed amount of time (*e*.*g*., three (3) or five (5) seconds, or a random time).

Although aspects of the invention(s) herein have been described with reference to particular embodiments, it is to be understood that these embodiments are merely illustrative of aspects of the present invention(s). It is therefore to be understood that numerous modifications may be made to the illustrative embodiments and that other arrangements may be devised without departing from the spirit and scope of the present invention(s) as defined by the appended claims.

It will also be appreciated that the various dependent claims and the features set forth therein can be combined in different ways than presented in the initial claims. The features described in connection with individual embodiments may also be shared with others of the described embodiments.

Further features and aspects of the invention may reside in the below clauses:
1. A ball-throwing apparatus comprising:
   a receptacle for holding at least one ball-shaped projectile, the receptacle having an opening;
   a feeder having a track associated with the opening in the receptacle, the track having a first section positioned adjacent the opening and a second section spaced apart from the first section;
   a holder for holding the ball-shaped projectile in a stationary position;
   a launching assembly for launching the at least one projectile in a direction extending away from the ball-throwing apparatus; and
   a handle attached to the receptacle for carrying the ball-throwing apparatus, the handle having a gripping section spaced apart and extending vertically upwards relative to the receptacle.
2. A ball-throwing apparatus according to clause 1, wherein the ball-throwing apparatus is sized so that a variety of different pets are able to drop the at least one ball-shaped projectile into the receptacle.
3. A ball-throwing apparatus according to any preceding clause, further comprising an exterior shell forming an enclosure, wherein the first and second sections of the track of the feeder are positioned within the enclosure of the exterior shell.
4. A ball-throwing apparatus according to clause 3, wherein the exterior shell includes an opening, the opening being adapted to allow the at least one ball-shaped projectile to be launched through the opening.
5. A ball-throwing apparatus according to any preceding clause, wherein the launching assembly comprises a hammer having a striking surface for striking the at least one ball-shaped projectile, and a motor configured to rotate the hammer about a point and assist with causing the striking surface to strike the at least one ball-shaped projectile.
6. A ball-throwing apparatus according to clause 5, wherein at least a portion of the hammer is engaged to a spring that flexes during operation of the launching assembly to assist with rotation of the hammer about the point.
7. A ball-throwing apparatus according to any preceding clause, wherein the launching assembly has a first setting in which the at least one ball-shaped projectile is launched from the ball-throwing apparatus at a first rate of speed, and a second setting in which the at least one ball-shaped projectile is launched from the ball-throwing apparatus at a second, greater rate of speed, the first and second settings being selectable at the option of a user.
8. A ball-throwing apparatus according to any preceding clause, wherein the gripping section of the handle is spaced apart from the receptacle by a distance that is less than a diameter of the at least one ball-shaped projectile so that the handle forms a barrier for containing the at least one ball-shaped projectile in the receptacle.
9. A ball-throwing apparatus according to any preceding clause, wherein the holder is movable to change the angle at which the at least one ball-shaped projectile is launched from the ball-throwing apparatus.
10. A ball-throwing apparatus according to any preceding clause, wherein the launching assembly includes a spring, and the ball-throwing apparatus further comprises a lever attached to a section of the spring, the lever being movable from a first orientation in which the spring is in a first condition to a second, different orientation in which the spring is in a second, relatively more flexed condition.
11. A method of exercising or entertaining a pet utilizing the apparatus of any one or more of the preceding clauses, the method comprising:
   (a) providing the ball-throwing apparatus of any preceding clause;
   (b) training the pet to drop the at least one ball-shaped projectile into the receptacle of the ball-throwing apparatus so that the at least one ball-shaped projectile travels through the opening in the receptacle, along the track of the feeder, and to the second section of the feeder;
   (c) causing the launching assembly to launch the at least one ball-shaped projectile from the ball-throwing apparatus; and
   (d) training the pet to retrieve the at least one ball-shaped projectile and drop it back into the receptacle.
12. A method of exercising or entertaining a pet according to clause 11, wherein the pet is a dog.

## Claims

1. A ball-throwing apparatus comprising:
a receptacle for holding at least one ball-shaped projectile, the receptacle being funnel-shaped, wherein the funnel shape of the receptacle leads to an opening in the receptacle;
a feeder having a track associated with the opening in the receptacle, the track having a first section positioned adjacent the opening and a second section spaced apart from the first section;
a holder for holding the at least one ball-shaped projectile in a stationary position; and
a launching assembly for launching the at least one projectile in a direction extending away from the ball-throwing apparatus, wherein the ball-throwing apparatus is sized so that a variety of different pets are able to drop the at least one ball-shaped projectile into the receptacle.

2. A ball-throwing apparatus according to claim 1, further comprising an exterior shell forming an enclosure, wherein the first and second sections of the track of the feeder are positioned within the enclosure of the exterior shell.

3. A ball-throwing apparatus according to claim 2, wherein the exterior shell includes an opening, the opening being adapted to allow the at least one ball-shaped projectile to be launched through the opening.

4. A ball-throwing apparatus according to any preceding claim, further comprising a handle attached to the receptacle for carrying the ball-throwing apparatus, the handle having a gripping section spaced apart and extending vertically upwards relative to the receptacle, wherein the gripping section of the handle is spaced apart from the receptacle by a distance that is less than a diameter of the at least one ball-shaped projectile so that the handle forms a barrier for containing the at least one ball-shaped projectile in the receptacle.

5. A ball-throwing apparatus according to any preceding claim, wherein the holder is movable to change the angle at which the at least one ball-shaped projectile is launched from the ball-throwing apparatus.

6. A ball-throwing apparatus according to claim 5, wherein the holder is movable to at least three different orientations, a first orientation in which the at least one ball-shaped projection is launchable at a first angle out of the ball-throwing apparatus, a second orientation in which the at least one ball-shaped projection is launchable at a second angle greater than the first angle out of the ball-throwing apparatus, and a third orientation in which the at least one ball-shaped projection is launchable at a third angle less than the first angle out of the ball-throwing apparatus.

7. A ball-throwing apparatus according to any preceding claim, wherein the launching assembly comprises a hammer having a striking surface for striking the at least one ball-shaped projectile, and a motor configured to rotate the hammer about a point and assist with causing the striking surface to strike the at least one ball-shaped projectile.

8. A ball-throwing apparatus according to any preceding claim, wherein the launching assembly has a first setting in which the at least one ball-shaped projectile is launched from the ball-throwing apparatus at a first rate of speed, and a second setting in which the at least one ball-shaped projectile is launched from the ball-throwing apparatus at a second, greater rate of speed, the first and second settings being selectable at the option of a user.

9. A ball-throwing apparatus according to claim 7 or claim 8 when dependent from claim 7, wherein:
at least a portion of the hammer is engaged to a spring that flexes during operation of the launching assembly to assist with rotation of the hammer about the point; and
the ball-throwing apparatus further comprises a lever attached to a section of the spring, the lever being movable from a first orientation in which the spring is in a first condition to a second, different orientation in which the spring is in a second, relatively more flexed condition.

10. A ball-throwing apparatus according to claim 9 when dependent from claim 8, wherein the first and second settings are selectable at the option of a user by moving the lever from the first orientation to the second orientation.

11. A ball-throwing apparatus according to any preceding claim, further comprising a sensor for sensing the at least one ball-shaped projectile and automatically sending an electrical signal to the launching assembly effective to cause the launching assembly to launch the at least one ball-shaped projectile.

12. A ball-throwing apparatus according to any preceding claim, wherein the receptacle of the ball-throwing apparatus is at a height that is sufficiently low enough for a dog to drop the at least one ball-shaped projectile into the receptacle.

13. A method of exercising or entertaining a pet utilizing the apparatus of any preceding claim, the method comprising:
(a) providing the ball-throwing apparatus of any preceding claim;
(b) training the pet to drop the at least one ball-shaped projectile into the receptacle of the ball-throwing apparatus so that the at least one ball-shaped projectile travels through the opening in the receptacle, along the track of the feeder, and to the second section of the feeder;
(c) causing the launching assembly to launch the at least one ball-shaped projectile from the ball-throwing apparatus; and
(d) training the pet to retrieve the at least one ball-shaped projectile and drop it back into the receptacle.

14. A method of exercising or entertaining a pet according to claim 13, wherein the pet is a dog.
